Europäisches Patentamt

European Patent Office

Office européen des brevets

(11) Publication number:

**0 344 736**
**A2**

## EUROPEAN PATENT APPLICATION

(21) Application number: 89109790.9

(51) Int. Cl.⁴: **G06F 13/42**

(22) Date of filing: 31.05.89

(30) Priority: 31.05.88 JP 131515/88

(43) Date of publication of application:
06.12.89 Bulletin 89/49

(84) Designated Contracting States:
DE FR GB

(71) Applicant: Kabushiki Kaisha Toshiba
72, Horikawa-cho Saiwai-ku
Kawasaki-shi(JP)

(72) Inventor: Sato, Fumitaka Intellectual Property
Division
K.K. Toshiba 1-1 Shijbaura 1-chome
Minato-ku Tokyo 105(JP)

(74) Representative: Lehn, Werner, Dipl.-Ing. et al
Hoffmann, Eitle & Partner Patentanwälte
Arabellastrasse 4
D-8000 München 81(DE)

(54) High-speed synchronous data transfer system.

(57) In a high-speed synchronous data transfer system, a receiver functional unit (21) is synchronized with a transmitter functional unit (20) by a common clock. The receiver functional unit (21) includes a first register (26) for holding data from the transmitter functional unit (20) at a predetermined timing in the middle of a machine cycle, a second register (28) for holding the data held in the first register (26) at the end point of the machine cycle, a first state holding unit (27) for holding a specific interface signal, output from the transmitter functional unit (20), and representing data transfer from the transmitter functional unit (20), at the same timing as the first register (26), and for indicating whether effective data is held in the first register means, and a second state holding unit (29) for inhibiting, when effective data is held in the first register (26) but is not permitted to be loaded in the second register (28), a latching operation of the next data of the first register (26) at the end point of the machine cycle.

F I G. 4

## High-speed synchronous data ransfer system

The present invention relates to high-speed data transfer between functional units and, more particularly, to a synchronous data transfer system capable of transferring data at high-speed between a plurality of pipelined functional unit stages for performing data processing at high speed, and incorporated in a highly integrated ASIC for a specific application.

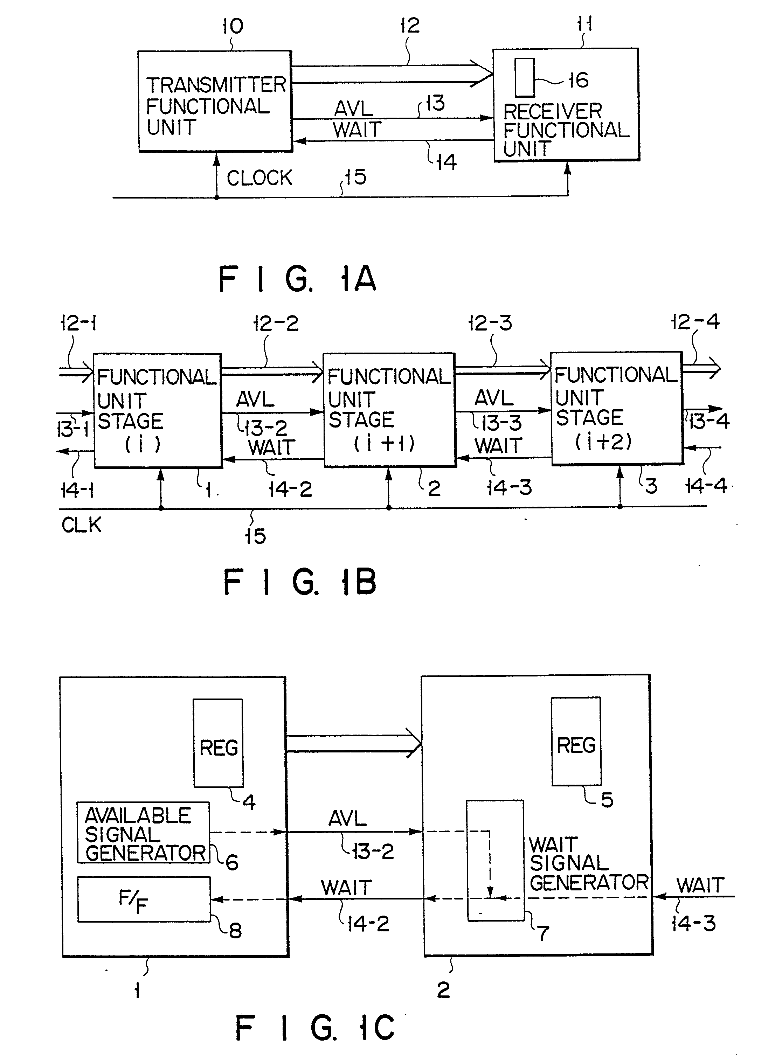

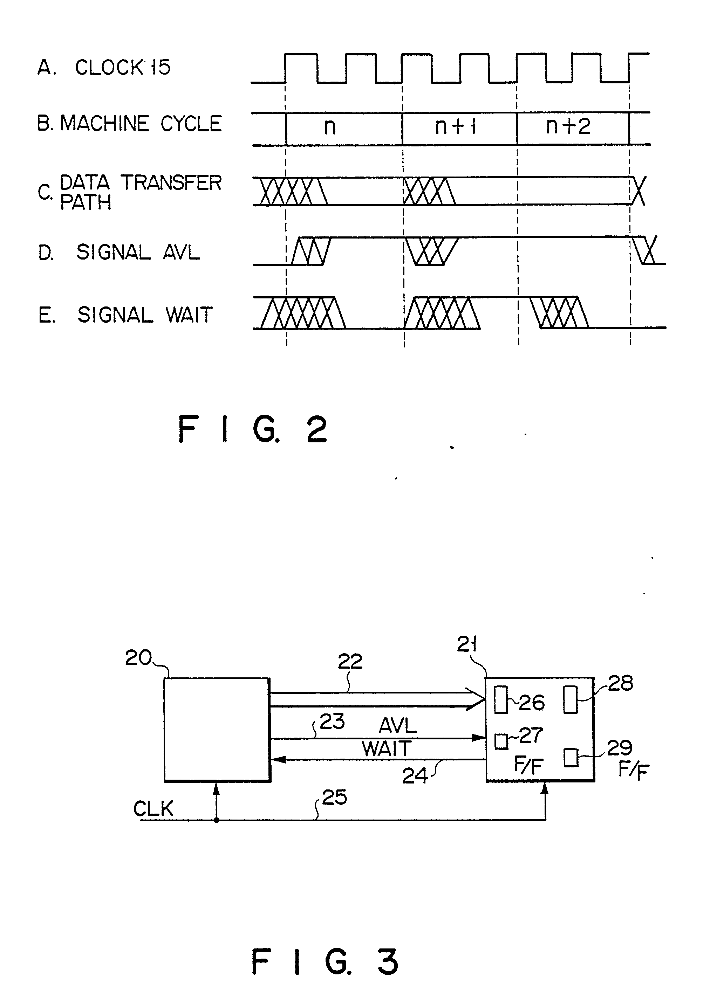

A conventional system for performing synchronous data transfer between functional units is generally arranged as shown in Fig. 1A. Referring to Fig. 1A, data transfer between functional units 10 and 11 having an LSI arrangement as an ASIC is performed once for each machine cycle as represented by a machine cycle n shown in Fig. 2B. In this data transfer, the transmitter functional unit 10 generates and transmits an available signal AVL 13 of logic "1" (high level) representing data transmission to the receiver functional unit 11. In this description, a positive logic is used. When the receiver functional unit 11 is in a state capable of receiving data from the transmitter functional unit 10 in its machine cycle n as shown in Fig. 2E, in response to the signal $\overline{AVL}$ 13 of logic "1" shown in Fig. 2D, data from the transmitter functional unit 10 is loaded in a register 16 of the receiver functional unit 11 at the end point of the machine cycle n, i.e., at the boundary between the machine cycle $\overline{n}$ and the next machine cycle (n + 1).

When the receiver functional unit 11 cannot receive data from the transmitter functional unit 10 in the machine cycle (n + 1) shown in Fig. 2B even if the unit 10 outputs data and the signal AVL 13 of logic "1", a wait signal WAIT 14 of logic "1" representing this is output from the receiver functional unit 11 to the transmitter functional unit 10, as shown in Fig. 2E. The signal WAIT 14 representing whether the unit 11 is in a state capable of receiving data is generated inside the unit 11 under complex generation conditions. The conditions for outputting the signal WAIT 14 include whether the signal AVL 13 from the transmitter functional unit 10 is received and whether the receiver functional unit 11 is set in a state capable of receiving data in its current machine cycle. Therefore, it takes a long time period to determine the state of the signal WAIT 14 in the unit 11. That is, the signal WAIT 14 cannot be determined at a considerably early timing of the machine cycle. For this reason, even if an LSI arrangement is adopted to each of the functional units 10 and 11 to increase its internal operational speed, it is difficult to shorten the rate the machine cycle. Note that in Figs. 2A to 2E, states of a data signal on a data transfer path 12 and the signals AVL 13 and WAIT 14 are those at the receiver side. In Fig. 2D, the signal AVL 13 is set at logic "0" in a machine cycle prior to the machine cycle n. In addition, Fig. 2C shows a state in which the $\overline{transmitter}$ functional unit 10 does not send data.

When the transmitter functional unit 10 receives and discriminates the signal WAIT 14 of logic "1" from the receiver functional unit 11 in the machine cycle (n + 1) as shown in Fig. 2E, it successively sends the same data and the signal AVL 13 of logic "1" in the next machine cycle (n + 2) as in the machine cycle (n + 1). When the receiver functional unit 11 is set in a state capable of receiving data from the transmitter functional unit 10 in the machine cycle (n + 2), it cancels the signal WAIT 14 and loads the data in the register 16 at the end point of the machine cycle (n + 2). In this case, two machine cycles are required to transfer one data.

Even when functional unit stages 1, 2, and 3 are pipelined as shown in Fig. 1B, an operation for determining a state of the next stage is similar to that shown in Fig. 1A. When the stages 1 and 2 are arranged as shown in Fig. 1C, a signal AVL output from an available signal generator 6 at the stage 1 is received by a wait signal generator 7. In accordance with a signal WAIT from the stage 3, the signal AVL is returned to the stage 1 as a signal WAIT from the stage 2. Therefore, in order to generate the signal WAIT at the stage 2, the signal WAIT from the stage 3 must be received, and this takes a long period of time. In addition, after the signal WAIT from the stage 3 is received, the signal WAIT is sent from the stage 2 to the stage 1. Therefore, a time required for the stage 1 to determine whether the data can be received by the stage 2 is longer than a propagation time required for the signal AVL to reciprocate between the stages 1 and 2. For this reason, the rate of a clock cannot be increased, and therefore a time period of the machine cycle cannot be shortened.

As semiconductor techniques have progressed, a chip internal operational speed of an LSI has been increased year after year. As described above, however, a signal transmission speed between chips has not been increased so much. For this reason, when the functional units 10 and 11 shown in Fig. 1A are independently incorporated in LSIs and the LSIs are mounted on different printed circuit boards, a time required for signal propagation between the functional units 10 and 11 occupies a large ratio of a time period of the machine cycle. This ratio is further increased when a circuit element such as a logic circuit is inserted between the functional units 10 and 11. In addition, in the conventional data transfer system, generation conditions of a signal representing whether data from the transmitter functional unit can be received by the receiver functional unit are not only complex but also include even a state of another functional unit connected to the output of the receiver functional unit. For this reason, a state of the signal cannot be determined at a relatively early timing in the machine cycle. Therefore, even if an internal operational speed of the functional unit is increased, it is difficult to shorten the machine cycle, and a data transfer rate between the functional units cannot be increased.

It is, therefore, an object of the present invention to provide a synchronous data transfer system capable of determining at a relatively early timing in a machine cycle whether data from a transmitter functional unit can be received by a receiver functional unit, thereby performing data transfer between the functional units at high speed.

In order to achieve the above object of the present invention, a system for synchronously transferring data between first and second functional units at high speed comprises the first and second functional units. The first functional unit includes transmission signal transmitting means, operating in. synchronism with an input master clock signal defining a machine cycle, for generating and outputting a data transmission signal, .representing that data is to be transferred, to the second functional unit at the start of a current machine cycle. The second functional unit includes state signal transmitting means, operating in synchronism with an input master clock signal, for generating, in accordance with only an internal state of the second functional unit, a reception· state signal representing whether data can be received in the current machine cycle, and transmitting the reception state signal to the first function unit at the start of the first machine cycle.

The first functional unit further comprises means for causing, in accordance with the reception state signal representing that the second functional unit cannot receive data in the current machine cycle, the transmitting means to continuously transmit the data transmission signal to the second functional unit even in a machine cycle next to the current machine cycle, transmission register means for latching internally generated data, and transmitting the held data to the second functional unit, and means for inhibiting, in accordance with the reception state signal representing that the second functional unit cannot receive data in the current machine cycle, a latching operation of the transmission register means in the current machine cycle.

The second functional unit further comprises first register means for receiving data from the first function unit at a predetermined timing in the current machine cycle, second register means for selectively receiving data from the first register means, and first state holding means for representing that effective data is held in the first register means. The second functional unit further comprises means for inhibiting, in accordance with the reception state signal representing that the second function unit cannot receive data in the current machine cycle, reception by the first register means in the current machine cycle, and means for permitting, in accordance with a state control signal representing that the second function unit can receive data, the second register means to receive data from the first register means at the start of machine cycle next to the current machine cycle.

The second functional unit further comprises means for inhibiting, in accordance with the state control signal representing that the second functional unit cannot receive data, the second register means from receiving data in the next machine cycle, and means for generating a signal representing that the second register means has latched the data.

With the above arrangement, data transmitted from the first functional unit (transmitter functional unit) is held in the first register means of the second functional unit (receiver functional unit) at a predetermined timing in the middle of a machine cycle, and at the same time the state of a specific interface signal from the transmitter functional unit is held in the first state holding means, thereby representing that effective data is held in the first register means. At this time, if the second register means is not permitted to receive the data held in the first register means, the first register means is set in a latching operation inhibit state at the end point of the machine cycle. In accordance with the state of the second state holding means, information representing whether data can be received is transferred to the transmitter functional unit in the next machine cycle. That is, the receiver function unit can determine at an early timing in the machine cycle whether data can be received from the transmitter functional unit. Therefore, even if a signal transmission rate (operation of an interface of the functional unit) between the functional units is much lower than an internal operational speed of each functional unit, a clock rate can be increased and a machine cycle can be shortened to substantially correspond to a time period required for a signal to propagate in one direction of an interface, thereby increasing an operational speed of the overall system. In addition, when an inhibit state is set at the end point of a machine cycle n, the latching operation of the first register is inhibited. Therefore, the content of the first register means is not updated even after the predetermined timing in the middle of the next machine cycle (n + 1), and the held data is kept held. That is, the first register means contributes to a clock skew countermeasure and also serves as a data buffer when the second register means is not permitted to receive data.

In order to achieve the above object of the present invention, a method of synchronously transferring data between first and second functional units at high speed, comprises:
generating and outputting a data transmission signal, representing that data is to be transferred, from the first to second functional unit in synchronism with a master clock signal at the start of a current machine cycle, the master clock defining the machine cycle; and
generating, in the second functional unit, a reception state signal representing that data can be received in the current machine cycle, in synchronism with the master clock signal and independently of the data transmission signal, and transmitting the reception state signal to the first functional unit at the start of the first machine cycle.

As described above, according to the present invention, especially the signal for transmitting information, representing whether data from the transmitter functional unit can be received by the receiver functional unit, to the transmitter functional unit can be determined at a relatively early timing in a machine cycle in accordance with only an internal state of the receiver function unit regardless of an external input. Therefore, a clock rate can be increased and a machine cycle can be shortened to substantially correspond to a time period required for a signal to propagate in one direction between the functional units, thereby increasing a data transfer rate between the functional units. In addition, two stages of registers are used to receive data from the transmitter functional unit, and the register at the front stage is strobed at a predetermined timing in the middle of the machine cycle. Therefore, not only the register at the front stage can serve as a data buffer when the register at the second stage cannot receive data, but also a stable operation is assured even if a clock skew between the functional units is increased.

This invention can be more fully understood from the following detailed description when taken in conjunction with the accompanying drawings, in which:

Fig. 1A is a block diagram showing an arrangement of a conventional synchronous data transfer system;

Fig. 1B is a clock diagram showing an arrangement of a conventional pipelined synchronous data transfer system;

Fig. 1C is a block diagram for explaining a relationship between a signal AVL and a signal WAIT between functional unit stages shown in Fig. 1B;

Figs. 2A to 2E are timing charts for explaining an operation of the system shown in Fig. 1A;

Fig. 3 is a block diagram showing a synchronous data transfer system according to an embodiment of the present invention;

Fig. 4 is a block diagram showing in detail internal arrangements of functional units 20 and 21 shown in Fig. 3;

Figs. 5A to 5G are timing charts for explaining an operation of the embodiment shown in Fig. 3;

Fig. 6 is a block diagram showing a modification of the receiver functional unit 21 shown in Fig. 4;

Figs. 7A to 7I are timing charts for explaining an application of the arrangement shown in Fig. 3;

Fig. 8 is a block diagram showing an arrangement in which functional units are connected to a bus; and

Fig. 9 is a block diagram showing a system comprising pipelined functional units.

A high-speed synchronous data transfer system according to the present invention will be described in detail below with reference to the accompanying drawings.

An arrangement of a synchronous data transfer system according to an embodiment of the present invention will be described below with reference to Fig. 3. In the embodiment shown in Fig. 3, functional units 20 and 21 are LSI chips using, for example, CMOS large-scale ASICs and are connected with each other via a data transfer path 22. A clock CLK 25 is supplied to the functional units 20 and 21 in order to define timings of an internal operations of the functional units 20 and 21 and especially to synchronize data transfer timings. The functional units 20 and 21 take over portions of processing operations to be executed by the overall system.

The transmitter functional unit 20 transfers, e.g., 1-byte data representing a result of its allotted processing operation in parallel to the receiver functional unit 21 in a certain machine cycle via the data transfer path 22. Simultaneously with data transmission, the unit 20 generates and transmits a transfer control signal (available signal AVL) 23 as an interface signal to the receiver functional unit 21. Signal AVL 23 represents that the data is transmitted onto the data transfer path 22. The unit 21 generates, independently of the signal AVL 23, a transfer control signal (wait signal WAIT) 24 as the interface signal and transmits the signal WAIT 24 to the transmitter functional unit 20. Signal WAIT 24 represents whether or not the transmitted data can be received in the machine cycle. When the receiver functional unit 21 is in a state capable of receiving data, it receives the transmission data from the transmitter functional unit 20 in this machine cycle, and executes a processing operation assigned to the unit in the next machine cycle. A function of transmitting a result of the assigned processing operation to a functional unit (not shown) at the next stage may be arbitrarily provided.

A register 26 in the receiver functional unit 21 latches the transmission data from the transmitter functional unit 20 at a predetermined timing of the current machine cycle, e.g., at a timing for a 1/4 machine cycle before the end point of the current machine cycle, i.e., the start point of the next machine cycle. A flip-flop (to be referred to as an F F hereinafter) 27 is, e.g., a D-type F F for latching the signal AVL 23 at the same timing as that of the register 26. A register 28 latches the data held in the register 26 at the timing of the end point of the current machine cycle. A D-type F F 29 is set when the F/F 27 has been set and the data held in the register 26 is not permitted to be loaded in the register 28. When the F/F 29 is set, data transfer from the register 26 to the register 28 is inhibited, and an active signal WAIT 24, i.e., a signal WAIT 24 of logic "1" is generated.

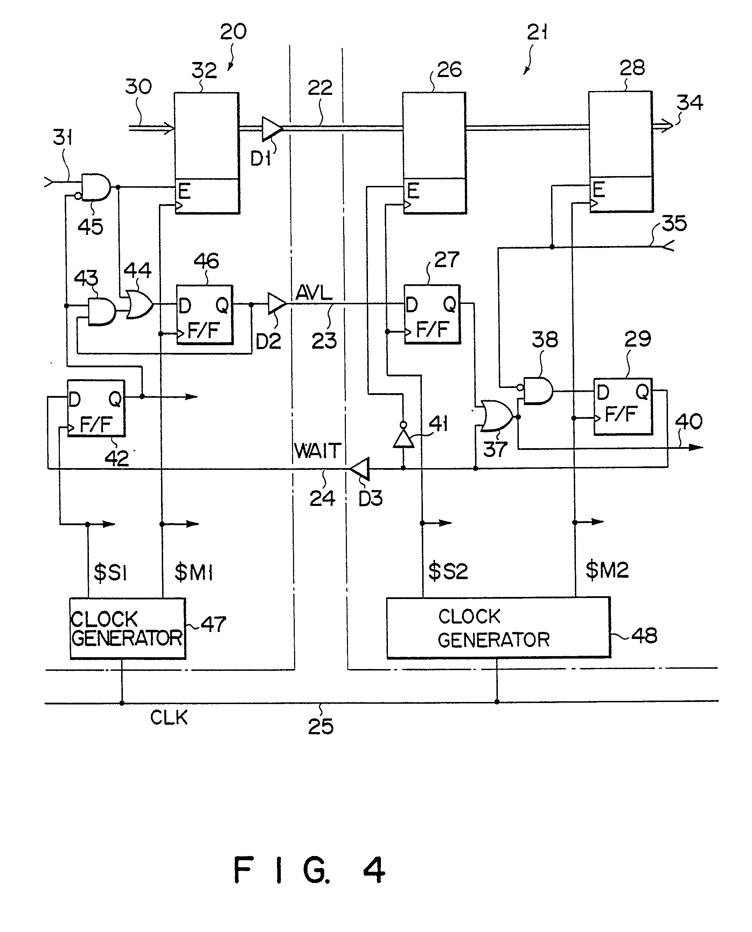

Fig. 4 is a block diagram showing in detail internal arrangements of the transmitter and receiver functional units 20 and 21 shown in Fig. 3. Note that the same reference numerals as in Fig. 3 denote the same parts in Fig. 4.

Referring to Fig. 4, a clock generator 47 of the transmitter function unit 20 generates strobe clock pulses $M1 and $S1 for defining a timing in accordance with a clock 25. An AND gate 45 receives a signal 31 for clock-enabling a register 32 which signal is generated inside. An inverted output from an F/F 42 to be described later is supplied to the AND gate 45. An output from the AND gate 45 is supplied to a clock enable terminal E of the register 32. When the transmitter functional unit 20 is in an output enable state, the F/F 42 is in a reset state, and its Q output signal is at logic "0". At this time, the AND gate 45 is enabled to output the signal 31 to the clock enable terminal E of the register 32. The signal 31 is active (at logic "1") when the data generated in the transmitter functional unit 20 is effective and at the same time the unit 20 is in the output enable state. When the register 32 receives the pulse $M1 from the clock generator 47 and a signal of logic "1" at its clock input terminal and clock enable terminal E, respectively, it latches the data generated in the transmitter functional unit 20 via a path 30. As a result, the data latched by the register 32 is output onto the data transfer path 22 via an output driver D1. The output from the AND gate 45 is also supplied to one input terminal of an OR gate 44. An output signal from an AND gate 43 is supplied to the other input terminal of the OR gate 44. An output signal from the OR gate 44 is supplied to a D input terminal of a D-type F/F 46. The pulse $M1 is supplied from the clock generator 47 to the clock input terminal of the F/F 46. Therefore, the F/F 46 sets a D input to a Q output in synchronism with a timing of the pulse $M1, i.e., at the same timing at which the data is loaded in the register 32. As a result, the Q output from the F/F 46 is output as a signal AVL via a driver D2.

The signal WAIT 24 from the receiver functional unit 21 is supplied to the D input terminal of the F/F 46. The signal WAIT 24 is set in the F/F 42 at a timing of the pulse $S1 in the same machine cycle as the above pulse $M1. The Q output from the F/F 42 is inverted and supplied to the AND gate 45. When the Q output from the F/F 42 is at logic "1", the AND gate 45 is disabled to inhibit the signal 31 from being transmitted to the clock enable input terminal E of the register 32. As a result, an operation of loading new data in the register 32 is inhibited, and the data held in the register 32 in the current machine cycle is kept held therein in the next machine cycle. Therefore, the data on the data transfer path 22 does not change. That is, when the receiver functional unit 21 outputs the signal WAIT 24 of logic "1" at the start of a certain machine cycle, the transmitter functional unit 20 determines that the transmitted data cannot be received by the receiver functional unit 21 and successively sends the same data in the next machine cycle.

The Q output from the F/F 42 is also supplied to the AND gate 43 together with the Q output from the F/F 46. The output signal from the AND gate 43 is supplied to the OR gate 44 together with the output signal from the AND gate 45. The output signal from the OR gate 44 is supplied to the D input terminal of the F/F 46. Therefore, when the F/F 46 is already set, i.e., its Q output signal is at logic "1" and at the same time the Q output signal from the F/F 42 is at logic "1", the output signal from the AND gate 43 is set at logic "1". As a result, since the F/F 46 is kept set in the next machine cycle, the signal AVL 23 of logic "1" is maintained in the next machine cycle.

The Q output from the F/F 42 can also be used as a clock enable signal for various registers in the transmitter functional unit 20, e.g., an input signal for a logic circuit (not shown) for generating the signal 31. As described above, the Q output from the F/F 42 is updated by the signal WAIT in synchronism with the timing of the pulse $S1. Therefore, in this embodiment, only a 1/4 machine cycle is left until a timing of the pulse $M1 in the next machine cycle. However, since a clock enable signal system is generally designed to shorten a signal propagation time, no problem is posed.

A pulse generator 48 in the receiver functional unit 21 generates strobe clock pulses $M2 and $S2 for defining a timing in accordance with the clock CLK 25. In order to propagate the clock CLK, the pulses $M2 and $S2 are slightly shifted from the pulses $M1 and $S1. The data on the data transfer path 22 is supplied to the input terminal of the register 26 of the receiver functional unit 21. The Q output signal from the F/F 29 is inverted by an inverter 41 and supplied to the clock enable input terminal E of the register 26. The pulse $S2 is supplied from the pulse generator 48 to the clock input terminal of the register 26. Therefore, when the F F 29 is reset and its Q output signal is at logic "0", the data on the path 22 is latched by the register 26 at a timing of the pulse $S2 in the same machine cycle in which the transmitter functional unit 20 sends the data to the path 22. The latched data is output to the register 28.

The signal AVL 23 from the transmitter functional unit 20 is supplied to the D input terminal of the F F 27 of the receiver functional unit 21. The pulse $S2 is also supplied from the clock generator 48 to the clock input terminal of the F/F 27. Therefore, the signal AVL 23 is latched by the F/F 27 at the same timing as the data is latched by the register 26. As a result, when the signal AVL is at logic "1", the F/F 27 is set. Setting of the F/F 27 represents that the new data is latched by the register 26.

The data held in the register 26 is supplied to the input terminal of the register 28. A signal 35 representing whether or not the data held in the register 26 can be received by the register 28 in the receiver functional unit 21 is supplied to the clock enable input terminal E of the register 28. The pulse $M2 is supplied from the clock generator 48 to the clock input terminal of the register 28. Therefore, when the register 28 can receive the data, i.e., when the signal 35 is at logic "1", the data held in the register 26 is loaded in the register 28 at a timing of the pulse $M2 in a machine cycle next to the machine cycle to which the above pulse $S2 belongs. When the register 28 cannot receive the new data from the register 26 in the receiver functional unit 21, the signal 35 is at logic "0", and a latching operation of the register 28 is inhibited. As a result, even after the timing of the pulse $M2 has passed, i e the next machine cycle has started, the data held in the registers 26 and 28 are kept unchanged. In this case, a logic circuit comprising a combination circuit for performing data processing to data from the register 26 can be inserted between the registers 26 and 28, if necessary. However, a time interval from the timing of the pulse $S2 to the timing of the pulse $M2 in the next machine cycle is shorter than the machine cycle, i.e., about a 1/4 machine cycle in this embodiment. Therefore, the number of logic stages must be naturally decreased.

The Q output signals from both the F/Fs 27 and 29 are supplied to an OR gate 37. An output signal from the OR gate 37 is supplied to the AND gate 38 together with an inverted signal of the signal 35. An output signal 40 from the OR gate 37 used in the receiver functional unit 21 serves the same purpose as that of the output from the F/F 42 in the transmitter functional unit 20. The signal 40 represents that data to be loaded next in the register 28 is held in the register 26. An output signal from the AND gate 38 is supplied to the D input terminal of the F/F 29. Therefore, the signal 35 is gated by the output signal from the OR gate 37. The pulse $M2 from the clock generator 47 is supplied to the clock input terminal of the F/F 29. Therefore, the signal 35 is set in the F/F 27 at a timing of the pulse $M2. When the Q output signal from the F/F 27 is already at logic "1" and the signal 35 is at logic "0", the output signal of logic "1" from the AND gate 38 is supplied to the D input terminal of the F/F 29. The F/F 29 is set at logic "1" at a timing of the pulse $M2 in a machine cycle subsequent to that of the pulse $S2. That is, when the register 28 cannot receive the data held in the register 26, the F/F 29 is set. When the F/F 29 is set, the Q output signal of logic "1" from the F/f 29 is supplied as an active signal WAIT 24 to the transmitter functional unit 20 via an output driver D3 in this machine cycle. In addition, the Q output signal of logic "1" from the F/F 29 is level-inverted by the inverter 41 and supplied to the clock enable input terminal E of the register 26. As a result, a loading operation of new data to the register 26 is inhibited, and the currently-registered data is kept held therein.

When the signal 35 is set at logic "1" while the F/F 29 is set, i.e., when the register 28 is set in a state capable of receiving the data held in the register 26, the D input of the F/F 29 is set at logic "0", and the F/F 29 is reset at the timing of the pulse $M2. At the same time, the data held in the register 26 is loaded in the register 28. When the register F/F 29 is reset, loading operation inhibition of the register 26 is released, and the data successively sent from the transmitter functional unit 20 onto the data transfer path 22 is loaded in the register 26 at a timing of the pulse $S2 in the same machine cycle as the pulse $M2. When the F/F 29 is reset in synchronism with the pulse $M2, the signal WAIT 24 is set at logic "0" in the same machine cycle, and the F/F 42 of the transmitter functional unit 20 is reset at the timing of the pulse $S1 in this machine cycle. When the F/F 42 is reset, the AND gate 45 is enabled, and a loading operation of new transmission data in the register 32 at the timing of the pulse $M1 in the next machine cycle is enabled.

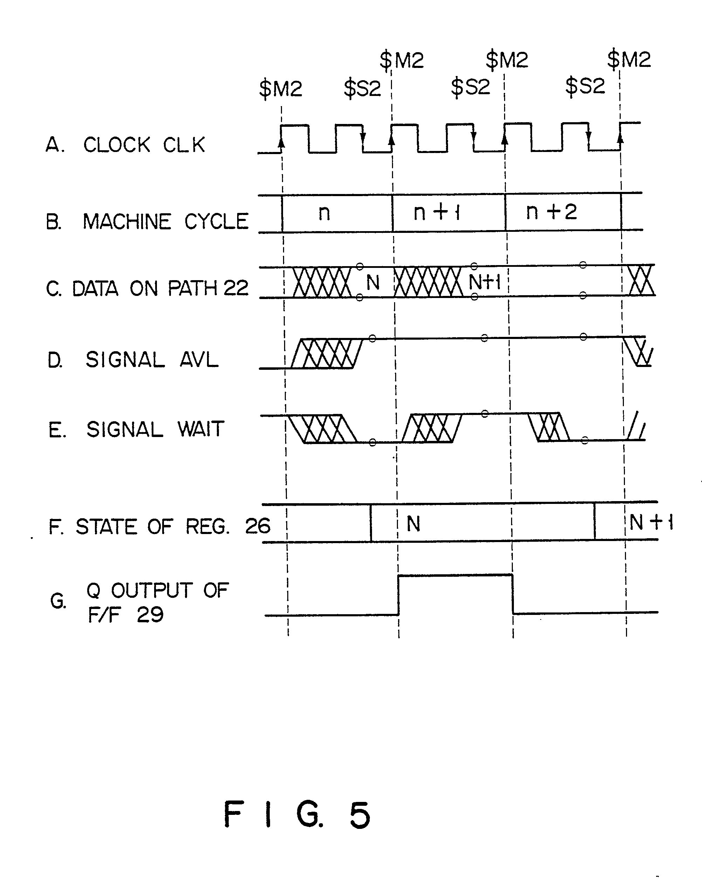

An operation of the above embodiment will be described in detail below with reference to Figs. 5A to 5G. Referring to Figs. 5A to 5G, signal waveforms obtained at the receiver side are shown on the basis of the pulses $M2 and $S2.

When data N is generated in a machine cycle before the machine cycle n in the transmitter functional unit 20 and the unit 20 is in a transmission enable state, the signal 31 becomes active (i.e., is set at logic "1"). At this time, if the F/F 42 is in a reset state, since the gate 45 is in an enable state, the signal 31 passes through the gate 45 and is supplied to the clock enable input terminal E of the register 32. The pulse $M1 of machine cycle n is supplied to the clock input terminal of the register 32. Therefore, the data N is latched by the register 32 via the path 30 at a timing of the pulse $M1 in the machine cycle n and is output from the transmitter functional unit 20 to the receiver functional unit 21 via the data transfer path 22. The signal 31 is also supplied to the D input terminal of the D-type F/F 46 via the OR gate 44. The pulse $M1 is supplied to the clock input terminal of the F/F 46. Therefore, the signal 31 is set in the F/F 46 at the same timing of the pulse $M1 as the data N is loaded in the register 32. At the same time as the data N is output onto the path 22, a signal AVL 23 of logic "1" representing that the data N is transmitted, is output to the receiver functional unit 21 via the driver D2. In addition, the transmitter functional unit 20 generates data (N + 1) in the machine cycle n. when the receiver functional unit 21 can receive data, the signal WAIT 24 of logic "0" is output from the F/F 29 to the transmitter functional unit 20 and strobed at the timing of the pulse $S1 in the machine cycle n, and the F/F 42 is reset.

The data N on the data transfer path 22 is supplied to the input terminal of the register 26 of the receiver functional unit 21, and the signal AVL 23 is supplied to the D input terminal of the F/F 27 of the unit 21. The pulse $S2 is supplied from the clock generator 48 to the clock input terminals of the register 26 and the F/F 27. The Q output signal from the F/F 29 is inverted by the inverter 41 and supplied to the clock enable input terminal E of the register 26. Since the F/F 29 is in a reset state, i.e., when the signal WAIT is at logic "0" the data on the path 22 is latched by the register 26 at a timing of the pulse $S2 in the machine cycle n, i.e., at a timing earlier than the end point of the machine cycle n by a 1/4 machine cycle. At the same time, the signal AVL 23 of logic "1" is latched by the F/F 27, and the F/F 27 is set. Setting of the F/F 27 represents that the new data is held in the register 26. The data N held in the register 26 is supplied to the input terminal of the register 28.

In the machine cycle (n + 1), the signal (significant at logic "1") 35 representing that the data N held in the register 26 can be received by the register 28 is supplied to the clock enable input terminal E of the register 28 of the receiver functional unit 21. When the data N held in the register 26 cannot be received by the register 28 in the unit 21 in the machine cycle (n + 1), the signal 35 is at logic "0". In this case, since the clock enable input terminal E of the register 28 is set at logic "0", a latching operation of the register 28 is inhibited. An inverted signal of the signal 35 gated by the Q output from the F/F 27 via the OR gate 37 is latched by the F/F 29 at the timing of the pulse $M2 in the machine cycle (n + 1), and the F/F 29 is set. When the F/F 29 is set, the Q output signal of logic "1" from the F/F 29 is supplied as an active signal WAIT 24 to the transmitter functional unit 20 via the output driver D3.

Since the F/F 42 has been reset in the transmitter functional unit 20 at the timing of pulse $S1 in the machine cycle n, the data (N + 1) generated in the machine cycle n and the signal AVL are transmitted from the unit 20 to the receiver functional unit 21 at the timing of $M1 of the machine cycle (n + 1). The Q output signal of logic "1" from the F/F 29 is inverted by the inverter 41 and supplied to the clock enable input terminal E of the register 26, and the input terminal E is set at logic "0". As a result, a loading operation of the register 26 is inhibited, and the data N is kept held even in a machine cycle (n + 1).

In the transmitter functional unit 20, the signal WAIT 24 is supplied to the D input terminal of the F/F 42 and latched by the F/F 42 at the timing of the pulse $S1. For this reason, when the signal WAIT 24 of logic "1" is sent from the unit 20, the F/F 42 is set at the timing of the pulse $S1 in the machine cycle (n + 1). The Q output signal from the F/F 42 is supplied to the AND gate 45. When the F/F 42 is set and its Q output signal is set at logic "1", the AND gate 45 is disabled, and transmission of the clock enable signal 31 to the clock enable input terminal E of the register 32 is inhibited. As a result, a loading operation of new data of the register 32 is inhibited, and the data (N + 1) is kept held in the machine cycle (n + 2). Therefore, the data on the data transfer path 22 does not change. That is, when the signal WAIT 24 of logic "1" is output from the receiver functional unit 21, the transmitter functional unit 20 determines that the data transmitted in the same machine cycle cannot be received by the receiver functional unit 21 and keeps transmitting the same data in the next machine cycle.

When the signal 35 is set at logic "1" during the machine cycle (n + 1), i.e., when the register 28 is set in a state capable of receiving the data held in the register 26 in the receiver functional unit 21, the D input of the F/F 29 is set at logic "0" since the Q output from the F F 29 is at logic "1", and the F.F 29 is reset at the timing of the pulse $M2 in the machine cycle (n + 2). At the same time, the data held in the register 26 is loaded in the register 28. When the F/F 29 is reset, loading operation inhibition of the register 26 is released, and the data (N + 1) successively transmitted from the transmitter functional unit 20 onto the path 22 is loaded in the register 26 at the timing of the pulse $S2 in the machine cycle (n + 2). In addition, the F/F 27 is set to indicate that the new data is loaded in the register 26.

In the transmitter functional unit 20, when the F F 29 is reset, the signal WAIT 24 is set at logic "0" in the machine cycle (n + 2), and the F/F 42 is reset at the timing of the pulse $S1 in the machine cycle (n + 2). When the F/F 42 is reset, the AND gate 45 is enabled so that the new data can be loaded in the register 32 at the timing of the pulse $M1 in a machine cycle next to the machine cycle (n + 2).

As is apparent from the above description, the register 26 contributes to a clock skew countermeasure (well known to those skilled in the art and therefore a detailed description thereof will be omitted). That is, even if a clock skew is considerably increased (in this embodiment, close to a 1/8 machine cycle on the basis of the reference) between the functional units 20 and 21, the register 26 can stably operate. In addition, the register 26 also serves as a data buffer when the register 28 is set in a state not capable of receiving data. For this reason, when the F/F 29 is set at the timing of the pulse $M2 in the machine cycle (n + 1), the signal WAIT 24 of logic "1", representing that the register 28 cannot receive the data N held in the register 26· in the machine cycle (n + 1) and therefore the register 26 cannot receive the data (N + 1) transmitted to the data transfer path 22 in the machine cycle (n + 1), is output to the transmitter functional unit 20 in accordance with the output from the F/F 29. A state of the signal WAIT 24 is determined before the machine cycle (n + 2) is started, i.e., at the timing of the pulse $S1 in the machine cycle (n + 1) in the receiver functional unit 21. Therefore, even if a signal propagation speed between the functional units 20 and 21 (an operation of an interface between the units 20 and 21) is much lower than an internal operational speed of the units 20 and 21, a clock rate can be increased and a machine cycle can be shortened to substantially correspond to a time period required for a signal to propagate in one direction in the interface (in this embodiment until the propagation time occupies close to a 3/4 machine cycle), thereby increasing an operation speed of the overall system.

One embodiment of the present invention has been described above in detail. The present invention, however, is not limited to the above embodiment but can be variously modified as will be described below.

For example, in the above embodiment, data transfer is performed in one direction from the functional unit 20 to 21. By combining the present invention with known techniques, however, the functional units 20 and 21 can have a similar circuit arrangement with both transmitting and receiving functions, and the data transfer path 22 can have an arrangement capable of performing bidirectional data transfer.

In addition, in Fig. 4, the register 26 and the inverter 41 may be omitted. In addition, F/F 27 may be triggered by the pulse $M2. In this case, although data cannot be buffered, the signal WAIT can be generated at the start of a certain machine cycle regardless of the signal AVL and without waiting for a signal WAIT from another functional unit if it is connected to the functional unit 21. Therefore, a clock rate can be increased to increase the data transfer speed.

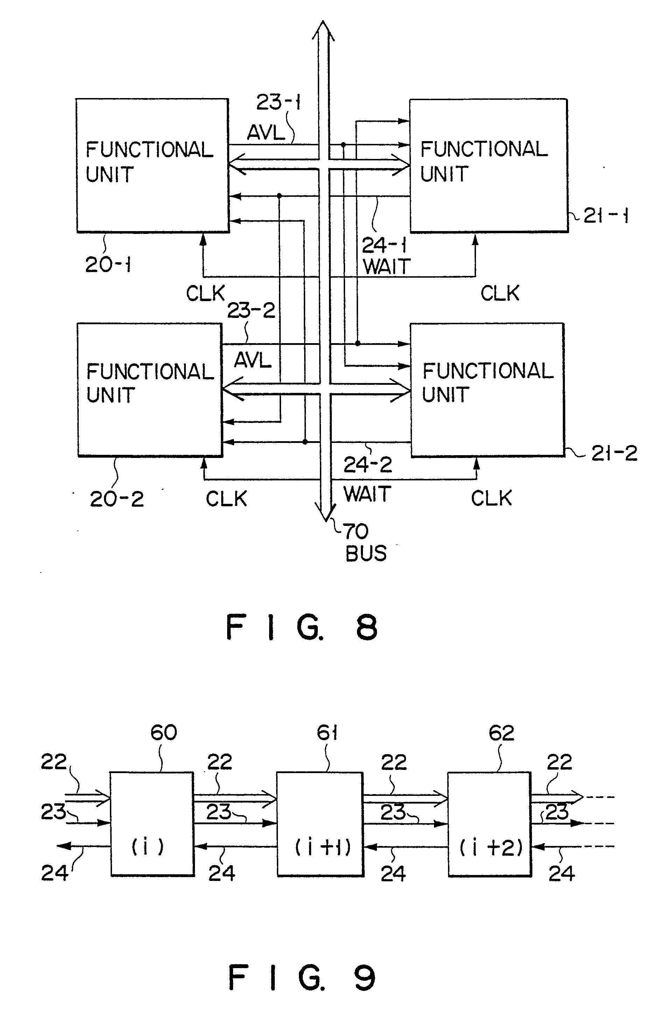

As shown in Fig. 8, the present invention can also be applied, in combination with conventional techniques, to a data transfer path of a "bus" type in which the number of transmitter functional units is increased. For example, functional units 20-1 and 20-2 scramble for, simultaneously with data transfer in a machine cycle n, a data transmission right in the next machine cycle (n + 1), and the functional unit which obtained the transmission right transmits data to a receiver functional unit 21-1 or 21-2 as described above. For example, when the transmitter functional unit 20-1 is to transmit data to the receiver functional unit 21-1, data transfer is controlled by a signal WAIT not from the functional unit 21-2 but from the functional unit 21-1.

Furthermore, in the above embodiment, each of the functional units 20 and 21 is an LSI chip using a CMOS large-scale ASIC. In the present invention, however, a GaAs LSI chip can be similarly used. The GaAs LSI chip is utilized in a field requiring a high speed. For this reason, when the GaAs LSI chip is used as a functional unit, a ratio between an internal operational speed of the chip and a signal propagation speed outside the chip is very large. Therefore, the present invention has a great effect in this application.

Moreover, the pulses $S1 and $S2 need not be generated at a timing a 1/4 machine cycle before the end point of the machine cycle but may be generated at any predetermined timing in the middle of the machine cycle. The timing can be arbitrarily determined in consideration of a system design and a functional unit design on the basis of a signal propagation speed between functional units, an internal operational speed of the unit, and the like.

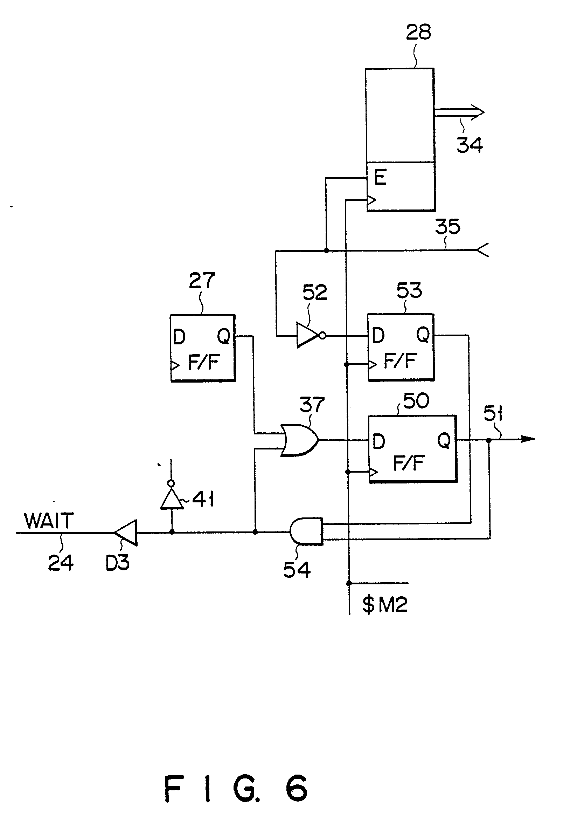

A small amount of logic circuits can be inserted between the register (32) and the F/Fs (46 and 29) to which interface signals (e.g., the data signal, the signal AVL, and the signal WAIT) are transmitted, and the output drivers (DI to D3). This arrangement is adopted when, for example, the output data 34 in Fig. 6 from the register 28 is significant in at least one machine cycle (the data 34 can be continuously significant in a subsequent machine cycle by setting the signal 35 at logic "0") and a synchronized signal representing "the output data 34 from the register 28 is significant" is required in designing the receiver functional unit 21. In this case, the output signal from the OR gate 37, for example, can be synchronized and used at the timing of the pulse $M2. For this purpose, the internal arrangement of the unit 21 shown in Fig. 4 may be partially altered as shown in Fig. 6. Note that the same reference numerals as in Fig. 4 denote the same parts in Fig. 6.

Referring to Fig. 6, an output signal from an OR gate 37, to which a Q output signal from a flip-flop (F/F) 27 and an output signal from an AND gate 54 to be described later are supplied, is supplied to a D input terminal of a D-type F/F 50. A pulse $M2 is supplied to a clock input terminal of the F/F 50. Therefore, when the F/F 27 is set, the Q output signal of logic "1" is supplied from the F/F 27 to the D input terminal of the F/F 50 via the OR gate 37, thereby setting the F/F 50 at a timing of the pulse $M2. As a result, a Q output signal 51 of logic "1" is supplied from the F/F 50. This signal can be used as a synchronized signal 51 representing "output data 34 from a register 28 is significant" in a functional unit. In the arrangement shown in Fig. 6, when processing of the data 34 held in the register 28 is completed and the register 28 is set in a state capable of receiving new data from the register 26, the signal 35 is set at logic "1". The signal 35 inverted by an inverter 52 is latched by an F/F 53 at the timing of the pulse $M2. A Q output signal from the F/F 53 together with the Q output signal from the F/F 50 are supplied to the AND gate 54. The output signal from the AND gate 54 has the same logical meaning as that of the Q output signal from the F/F 29 shown in Fig. 29 because it is at logic "1" only while the Q output signals from both the F/Fs 50 and 53 are at logic "1". Therefore, by using the output signal from the AND gate 54 in place of the Q output signal from the F F 29 shown in Fig. 4, transmission of a signal WAIT 24 and clock enable control of the register 26 can be performed.

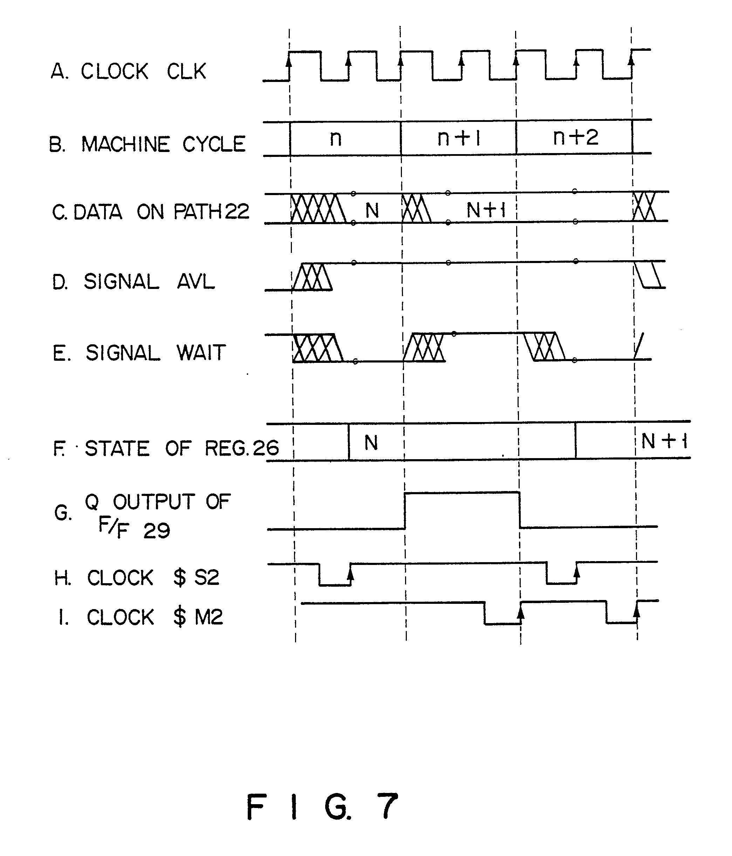

In the embodiment shown in Fig. 4, the register having the clock enable input terminal E (in the case of an ASIC, a register macrocell capable of clock enable) is applied. When a register of this type is not used, however, a system for gating with a pulse similar to a clock pulse in place of the strobe clock pulses $M and $S can be used, although it is not desirable in timing design. That is, a gated clock designing method, in which the leading or trailing edge of a pulse of a negative pulse train set at logic "0" from the pulse $S to $M as shown in Fig. 5A is used as a timing of the pulses $M and $S, may be applied. In this case, assuming that a clock having a frequency twice that defined by a machine cycle is commonly supplied to the respective functional units as in the embodiment shown in Fig. 4, strobe timings of the register 26 and the F/Fs 27 and 42 which receive the interface signals (the data signal on the data transfer path 22, the signal AVL 23, and the signal WAIT 24) first are preferably located at the center of the machine cycle as shown in timing charts of Figs. 7A to 7I. In this case, however, only clocks of the pulses $S1 and $S2 are shifted to the center of the machine cycle, and basic operations are similar to those shown in Figs. 4 and 5A to 5G.

Moreover, as shown in Fig. 9, the present invention can be applied to a system for performing data transfer in a pipeline manner in which a plurality of functional units 60, 61, 62,..., having a transmitting function of the transmitter functional unit 21 and a receiving function of the receiver functional unit 20 both shown in Fig. 4, are pipelined. In this system, a data buffer (the register 26 shown in Figs. 3 and 4) is provided at a receiving side of each of the functional unit 60, 61, 62,... Therefore, even when the functional unit 62 cannot receive data, for example, data transfer can be performed by exchanging interface signals only between the functional units 61 and 60. That is, no signal to be propagated through three or more functional unit stages is present in one machine cycle. As a result, a system clock rate can be increased as when the number of functional unit stages is small.

## Claims

1. A system for synchronously transferring data between first and second functional units at high speed, characterized by comprising:
said first functional unit (20) including available signal transmitting means (46), operating in synchronism with an input clock signal for defining machine cycles, for generating and outputting an available signal, representing that first data is available, to said second functional unit (21) at a start of a current machine cycle; and
said second functional unit (21) including state signal transmitting means, operating in synchronism with the input clock signal, for generating, in accordance with only an internal state of said second functional unit (21), a reception state signal representing whether the first data can be received in the current machine cycle, and transmitting the reception state signal to said first functional unit (20) at the start of the current machine cycle.

2. A system according to claim 1, characterized in that said first functional unit (20) further comprises means (42, 43, 44) for causing, in accordance with the reception state signal representing that said second functional unit (21) cannot receive the first data in the current machine cycle, said available signal transmitting means (46) to continuously transmit the available signal to said second functional unit (21) in a machine cycle next to the current machine cycle.

3. A system according to claim 2, characterized in that said first functional unit (20) further comprises:

transmission register means (32) for latching the first data internally generated in a machine cycle previous to the current machine cycle, and transmitting the first data to said second functional unit (21) in the current machine cycle; and
means (45) for inhibiting, in accordance with the reception state signal representing that said second functional unit (21) cannot receive the first data in the current machine cycle, a latching and transmitting operation of second data internally generated in the current machine cycle by said transmission register means (32) in the next machine cycle.

4. A system according to claim 1, characterized in that said second functional unit (21) further comprises first register means (26) for receiving the first data from said first functional unit (20) at a predetermined timing in the current machine cycle.

5. A system according to claim 4, characterized in that said second functional unit (21) further comprises means for inhibiting, in accordance with the reception signal representing that said second functional unit (21) cannot receive the first data in the current machine cycle, reception of the first data by said first register means (26) in the current machine cycle.

6. A system according to claim 5, characterized in that
said second functional means (21) further comprises:
second register means (28) for selectively receiving the first data from said first register means (26); and
means (48) for permitting, in accordance with the reception state signal representing that said second functional unit (21) can receive data, said second register means (28) to receive the first data from said first register means (26) at a start of a machine cycle next to the current machine cycle.

7. A system according to claim 6, characterized in that said second functional unit (21) further comprises means for inhibiting, in accordance with the reception state signal representing that said second functional unit (21) cannot receive data, said second register means from receiving the first data in the next machine cycle.

8. A system according to claim 6, characterized in that said second functional unit (21) further comprises means (50) for generating a signal representing that said second register means (28) has latched the first data.

9. A method for synchronously transferring data between first and second functional units at high speed, characterized by comprising:
generating and outputting, in said first functional unit, an available signal, representing that transfer of the data from said first to second functional unit is available, in synchronism with a clock in a current machine cycle, the clock defining the machine cycle; and
generating, in said second functional unit, a reception state signal representing whether the data can be received in the current machine cycle, in synchronism with the clock and independently of the available signal, and transmitting the reception state signal to said first functional unit in the current machine cycle.

10. A method according to claim 9, characterized by further comprising causing, in accordance with the reception state signal representing that said first functional unit cannot receive the data in the current machine cycle, said second functional unit to continuously transmit the available signal in a machine cycle next to the current machine cycle.

11. A method according to claim 10, characterized by further comprising:
latching the data internally generated, and transmitting the latched data to said second functional unit; and
inhibiting, in accordance with the reception state signal representing that said second functional unit cannot receive the data in the current machine cycle, a latching and transmitting operation of new data in the current machine cycle.

12. A method according to claim 9, characterized by further comprising receiving the data from said first functional unit by a first register in the current machine cycle.

13. A method according to claim 12, characterized by further comprising inhibiting, in accordance with the reception state signal representing that said second functional unit cannot receive the data in the current machine cycle, reception of the data by said first register in the current machine cycle.

14. A method according to claim 13, characterized by further comprising permitting, in accordance with the reception state signal representing that said second functional unit can receive the data. a second register to receive the data received by said first register in a machine cycle next to the current machine cycle.

15. A method according to claim 14, characterized by further comprising inhibiting, in accordance with the reception state signal representing that said second functional unit cannot receive the data, said second register from receiving the data from said first register in the next machine cycle.

16. A method according to claim 14, characterized by further comprising generating a signal representing that said second register has latched the data.

## FIG. 1A

TRANSMITTER FUNCTIONAL UNIT — 10

RECEIVER FUNCTIONAL UNIT — 11

16

12

AVL — 13

WAIT — 14

CLOCK — 15

## FIG. 1B

FUNCTIONAL UNIT STAGE (i) — 1

FUNCTIONAL UNIT STAGE (i+1) — 2

FUNCTIONAL UNIT STAGE (i+2) — 3

12-1

12-2

12-3

12-4

13-1

AVL 13-2 WAIT

AVL 13-3 WAIT

13-4

14-1

14-2

14-3

14-4

CLK — 15

## FIG. 1C

REG — 4

AVAILABLE SIGNAL GENERATOR — 6

F/F — 8

REG — 5

WAIT SIGNAL GENERATOR — 7

AVL — 13-2

WAIT — 14-2

WAIT — 14-3

1

2

EP 0 344 736 A2

A. CLOCK 15

B. MACHINE CYCLE

| n | n+1 | n+2 |

C. DATA TRANSFER PATH

D. SIGNAL AVL

E. SIGNAL WAIT

# F I G. 2

# F I G. 3

F I G. 4

F I G. 5

F I G. 6

A. CLOCK CLK

B. MACHINE CYCLE

C. DATA ON PATH 22

D. SIGNAL AVL

E. SIGNAL WAIT

F. STATE OF REG. 26

G. Q OUTPUT OF F/F 29

H. CLOCK $ S2

I. CLOCK $ M2

F I G. 7

F I G. 8

F I G. 9